# EUROPÄISCHE PATENTSCHRIFT

(11) **EP 2 587 155 B1**
(45) Veröffentlichungstag und Bekanntmachung des Hinweises auf die Patenterteilung: **02.07.2014**
(21) Anmeldenummer: 12007331.7
(22) Anmeldetag: 25.10.2012
(51) Int. Cl.: F23N 5/02, F23N 5/00, F23N 5/24, G01N 27/409, G01N 25/18

(54) **System und Verfahren zum Erkennen des Auftretens eines Überschusses an oxidierbaren Gasbestandteilen in einem Gasgemisch**
System and method for detecting the presence of an excess of oxidizable gas constituents in a gas mixture
Système et procédé de détection de la survenue d'un excès de composants de gaz oxydables dans un mélange de gaz

(30) Priorität: 25.10.2011 DE 102011116836; 08.08.2012 DE 102012015549
(43) Veröffentlichungstag der Anmeldung: 01.05.2013
(73) Patentinhaber: LAMTEC Meß- und Regeltechnik für Feuerungen GmbH, 69190 Walldorf (DE)
(72) Erfinder: Völkel, Marko, D-69190 Walldorf (DE); Hammer, Frank, D-75015 Bretten (DE)

(56) Entgegenhaltungen:
- EP-A2- 0 298 240
- DE-A1- 10 246 051
- DE-A1-102006 054 505

## Beschreibung

Die Erfindung betrifft ein System zum Erkennen des Auftretens eines Überschusses an oxidierbaren Gasbestandteilen in einem Gasgemisch, welches Sauerstoff und wenigstens einen weiteren, oxidierbaren, Gasbestandteil enthält, wobei das System ein fremdbeheiztes Sensorelement mit wenigstens einer Sensorelektrode, an der im Bereich des Sauerstoffüberschusses eine exotherme, katalytische Reaktion zwischen dem wenigstens einen oxidierbaren Gasbestandteil und Sauerstoff stattfinden kann, wobei die katalytische Reaktion einen messbaren Beitrag zu einem an der Sensorelektrode abgreifbaren Sensorsignal und einen messbaren Wärmeeintrag in das Sensorelement verursacht, sowie ein erstes Mittel zum Erfassen des Sensorsignals, sowie ein zweites Mittel zum Erfassen des zur Fremdbeheizung dem Sensorelement zugeführten messbaren Wärmeeintrags, umfasst, gemäß dem Oberbegriff des Anspruchs 1.

Die Erfindung betrifft weiter ein Verfahren zum Erkennen des Auftretens eines Überschusses an oxidierbaren Gasbestandteilen in einem Gasgemisch, welches Gasgemisch Sauerstoff und wenigstens einen weiteren, oxidierbaren, Gasbestandteil enthält, wobei das Verfahren mit einem fremdbeheizten, temperaturgeregelten, Sensorelement mit wenigstens einer Sensorelektrode, an der im Bereich des Sauerstoffüberschusses eine exotherme, katalytische Reaktion zwischen dem wenigstens einen oxidierbaren Gasbestandteil und Sauerstoff stattfinden kann, wobei die katalytische Reaktion einen messbaren Beitrag zu einem an der Sensorelektrode abgreifbaren Sensorsignal und einen messbaren Wärmeeintrag in das Sensorelement verursacht, sowie mit einem ersten Mittel zum Erfassen des Sensorsignals, und mit einem zweiten Mittel zum Erfassen des zur Fremdbeheizung dem Sensorelement zugeführten Wärmeeintrag arbeitet, gemäß dem Oberbegriff des Anspruchs 5.

Schließlich betrifft die Erfindung ein Computerprogramm mit Programmcode zur Durchführung der Verfahrensschritte des erfindungsgemäßen Verfahrens, wenn das Programm in einem Computer oder einer Elektronik zur Steuerung und Regelung ausgeführt wird, gemäß Anspruch 10.

Bei dem Sensorelement kann es sich beispielsweise um ein resistives Sensorelement mit einer katalytisch aktiven Elektrode handeln. Das Sensorsignal ist in diesem Fall dann der Sensorwiderstand oder die Änderung des Sensorwiderstands In einer besonders vorteilhaften Ausführungsform der Erfindung ist das Sensorelement ein potentiometrisches Sensorelement und das Sensorsignal ist eine zwischen zwei Sensorelektroden messbare Sensorspannung.

Der zur Fremdbeheizung des Sensorelementes dem Sensorelement zugeführte Wärmeeintrag kann erfasst werden durch das Erfassen der einem elektrischen Heizerelement zugeführten Heizleistung oder des Heizstromes in dem Heizerelement oder der Heizspannung, aber auch durch das Erfassen einer daraus ableitbaren oder messbaren Größe, wie beispielsweise des Widerstands des Heizerelementes oder des Innenwiderstandes des Sensorelementes selbst, im Falle eines keramischen Sensorelementes des keramischen Innenwiderstandes oder ähnlicher im Prinzip bekannter Größen. Das Mittel zum Erfassen des zur Fremdbeheizung dem Sensorelement zugeführten Wärmeeintrags erzeugt ein Meldesignal zur Indikation des zur Fremdbeheizung dem Sensorelement zugeführten Wärmeeintrags.

Die DE 44 28 953 C2 zeigt ein System und ein Verfahren zur Regelung und Überwachung einer Verbrennungsanlage. Dort wird ein an sich bekannter, potentiometrischer Sensor auf Basis eines sauerstoffionenleitenden Festkörperelektrolyten als Sensorelement zum Erkennen des Auftretens unvollständiger Verbrennung verwendet. Der dabei verwendete Sensor hat eine Referenzelektrode mit hoher katalytischer Aktivität, die einer Referenzatmosphäre, beispielsweise der Umgebungsluft, ausgesetzt ist, und eine Arbeitselektrode mit verringerter katalytischer Aktivität, die der zu untersuchenden Gasatmosphäre ausgesetzt ist. Sind oxidierbare Gasbestandteile in der zu untersuchenden Gasatmosphäre vorhanden, so stellt sich zwischen der Arbeits- und der Referenzelektrode eine höhere Sensorspannung ein als ohne oxidierbare Gasbestandteile. Das Verhältnis zwischen dem Sauerstoffpartialdruck der Umgebungsluft auf der Referenzseite und dem Sauerstoffpartialdruck im Messgas wird auch als Luftzahl λ bezeichnet. Je näher λ gegen den Wert eins strebt, desto höher wird die Sensorspannung. Ein λ - Wert von eins kennzeichnet bei idealer Verbrennung den Einsatz unvollständiger Verbrennung. Bei einem noch höheren Anteil an oxidierbaren Gasbestandteilen können diese nicht mehr vollständig verbrannt werden. Es befinden sich dann vermehrt oxidierbare Gasbestandteile im Abgas. Mit einem potentiometrischen Sensorelement wie in der DE 44 28 953 C2 genannt lässt sich somit ein Indikator dafür gewinnen, wann eine Luftzahl λ von 1 oder kleiner 1 erreicht ist. Ein solcher Indikatorwert kann zu Überwachungs- oder Regelungszwecken verwendet werden.

Allerdings erfordert die Verwendung eines potentiometrischen Sensors mit Referenzgasseite , dass der Sensor relativ groß oder sehr komplex ausgeführt sein muss, da eine gasdichte Trennung zwischen der Messgasseite und der Referenzgasseite erforderlich ist.

Die DE 10 2006 054 505 A1zeigt ein fremdbeheiztes potentiometrisches Sensorelement, das keine Referenzatmosphäre benötigt. Das Sensorelement umfasst einen planaren, keramischen Träger, auf dessen einer Breitseite eine ionenleitende Schicht aus Zikoniumdioxid-Keramik aufgebracht ist. Ein ebenfalls auf dem Sensorelement aufgebrachtes Heizelement wird verwendet, um die ionenleitende Schicht auf ihre Arbeitstemperatur zu bringen. Im Kontakt zur ionenleitenden Schicht sind sowohl die Arbeitselektrode, aus einem Material mit reduzierter katalytischer Aktivität, als auch die Referenzelektrode, aus einem Material mit guter katalytischer Aktivität, aufgebracht. Sowohl die Arbeits- als auch die Referenzelektrode sind der zu untersuchenden Gasatmosphäre ausgesetzt. Es ist keine gasdichte Durchführung zwischen einer Referenz- und einer Arbeitsatmosphäre erforderlich. Das Sensorelement kann sehr klein und kompakt, als miniaturisiertes Bauteil mit einer insgesamt sehr kleinen Wärmekapazität, aufgebaut werden. Das Sensorelement wird in einer vorteilhaften Betriebsweise in einem temperaturgeregelten Modus betrieben, das heißt, die dem Heizelement zugeführte Heizleistung wird mittels einer elektronischen Schaltung so geregelt, dass die Sensortemperatur auf einem vorwählbaren Sollwert konstant gehalten wird.

Bei dem in der DE 10 2006 054 505 A1 gezeigten Sensorelement entsteht zwischen der Arbeits- und der Referenzelektrode im Bereich des Luftüberschusses eine Sensorspannung nach einem ähnlichen Mechanismus, wie in der DE 44 28 953 C2 beschrieben. Da das Entstehen der Sensorspannung aufgrund einer katalytischen Reaktion mit Sauerstoff an der Sensorelektrode bewirkt wird, und diese katalytische Reaktion exotherm verläuft, steigt dabei aufgrund der katalytischen Elektrodenreaktion auch der Wärmeeintrag von der Sensorelektrode in das Sensorelement. Die elektronische Regelschaltung wird daher die dem Heizelement zugeführte Heizleistung verringern. Je mehr die Luftzahl sich dem Wert λ = 1 nähert, desto höher steigt die Sensorspannung an, und desto mehr wird die dem Heizelement zugeführte Heizleistung reduziert. Beim Überschreiten der Schwelle zur unvollständigen Verbrennung, im Bereich einer Luftzahl mit Werten < 1, fällt die Sensorspannung allerdings wieder schnell ab, da in diesem Bereich der Luftzahl kein Sauerstoff für die katalytische Reaktion an den Elektroden vorhanden ist.

Es ist daher durch Erfassen der Sensorspannung allein nicht möglich, zu entscheiden, ob die den Sensor umgebende Gasatmosphäre sich im Bereich des Luftüberschusses oder im Bereich des Luftmangels befindet. Dazu wird mindestens eine weitere, außerhalb des Sensors liegende Information, benötigt. Dies kann bei der Anwendung im Bereich der Verbrennungsregelung eine weitere Vorrichtung sein, die unabhängig vom Sensorelement einen Indikatorwert für den Luftsauerstoffgehalt abgibt, beispielsweise die Position des Stellungsreglers oder die Lüfterdrehzahl eines die Verbrennungsluft zuführenden Gebläses. Das ist aufwändig und beschränkt die Verwendungsmöglichkeit eines gattungsgemäßen Systems mit Sensorelement auf solche Anwendungen, bei denen eine zweite Information über den Sauerstoffgehalt vorliegt.

Es ist daher die Aufgabe der vorliegenden Erfindung, ein gattungsgemäßes System und ein gattungsgemäßes Verfahren so zu verbessern, dass es zum Erkennen des Auftretens eines Überschusses an oxidierbaren Gasbestandteilen in einem Gasgemisch, welches Gasgemisch Sauerstoff und wenigstens einen weiteren oxidierbaren Gasbestandteil enthält, ertüchtigt ist, ohne dass zusätzliche Informationen außerhalb des Sensors bezüglich des Luftzahl-Bereiches der Gasatmosphäre vorliegen, wobei das System insgesamt vereinfacht aufgebaut ist.

Die Aufgabe wird bezüglich des Systems gelöst durch ein System mit den kennzeichnenden Merkmalen des Anspruchs 1 und bezüglich des Verfahrens durch ein Verfahren mit den kennzeichnenden Merkmalen des Anspruchs 5.

Erfindungsgemäß also umfasst das System somit ein drittes Mittel zum Erkennen eines Überschusses an oxidierbaren Gasbestandteilen, wobei das dritte Mittel mit dem ersten Mittel und dem zweiten Mittel signaltechnisch, d.h. mindestens zum Datenaustausch verbunden ist, wobei das dritte Mittel dazu eingerichtet ist, um aus der Relation zwischen dem zeitlichen Verlauf der Sensorspannung und dem zeitlichen Verlauf der Heizleistung ein Meldesignal für das Auftreten eines Überschusses an oxidierbaren Gasbestandteilen und/oder einer Luftumgebung bei Anwesenheit oxidierbarer Gasbestandteile zu erzeugen.

Der Vorteil der Erfindung liegt darin, dass keine zusätzliche Information bezüglich des Luftzahl-Bereiches der Gasatmosphäre mehr benötigt wird. Es werden nur noch die an dem Sensorelement vorhandenen Informationen benutzt, nämlich der Verlauf der Sensorspannung und der Verlauf der Heizleistung. Es hat sich überraschend herausgestellt, dass durch Betrachten der Relation aus diesen beiden Signalverläufen eindeutig festgestellt werden kann, ob sich der Sensor in einer Gasatmosphäre im Bereich des Luftüberschusses oder des Luftmangels befindet.

Gemäß einer vorteilhaften Ausführungsform der Erfindung umfasst das Sensorelement einen sauerstoffionenleitenden Festkörperelektrolyten mit daran angebrachten wenigstens zwei Elektroden, wobei eine erste Elektrode katalytisch aktiv und eine zweite Elektrode katalytisch weniger aktiv ist, wobei im Bereich des Sauerstoffüberschusses die katalytische Reaktion zwischen dem oxidierbaren Gasbestandteil und dem Sauerstoff eine messbare Erhöhung der zwischen den beiden Sensorelektroden amessbaren Sensorspannung und einen zusätzlichen Wärmeeintrag in das Sensorelement verursacht, und wobei im Bereich des Überschusses an oxidierbaren Gasbestandteilen die messbare Erhöhung der zwischen den beiden Sensorelektroden messbaren Sensorspannung und der zusätzliche Wärmeeintrag in das Sensorelement nicht oder nur schwach auftreten. An einem solchen System ist der Bereich des Luftüberschusses daran zu erkennen, dass die Sensorspannung ansteigt und gleichzeitig die dem Heizelement zugeführte Heizleistung leicht sinkt. Der Bereich des Luftmangels ist daran zu erkennen, dass die Sensorspannung abfällt, und gleichzeitig die dem Heizelement zugeführte Heizleistung ansteigt. Insbesondere bei Überschreitung von λ = 1 zu λ < 1 ist dieser Spannungseinbruch aufgrund von Sauerstoffmangel so schnell, dass das in einem nahe λ = 1 beobachtbaren Heizleistungssprung deutlich indiziert wird.

Der Erfindung liegt die überraschende Erkenntnis zugrunde, dass im Bereich des Luftmangels nicht nur die Sensorspannung abfällt, sondern dass auch die Heizleistung, die dem Sensor zur Aufrechterhaltung der vorgegebenen Arbeitstemperatur zugeführt werden muss, wieder ansteigt.

Gemäß einer vorteilhaften Ausführungsform der Erfindung umfasst das Sensorelement einen planaren keramischen Träger mit einer darauf aufgebrachten Schicht aus einem sauerstoffionenleitenden Festelektrolyten, wobei an einer ersten Breitseite der Festelektrolyt-Schicht die beiden Elektroden aufgebracht sind.

Gemäß einer vorteilhaften Ausführungsform der Erfindung ist das dritte Mittel dazu eingerichtet, um bei einem Abfall der Sensorsignalspannung und einem gleichzeitigen Anstieg der Heizleistung ein Indikatorsignal für das Auftreten eines Überschusses an oxidierbaren Gasbestandteilen zu erzeugen.

Ein erfindungsgemäßes Verfahren zum Erkennen des Auftretens eines Überschusses an oxidierbaren Gasbestandteilen in einem Gasgemisch, welches Gasgemisch Sauerstoff und wenigstens einen weiteren oxidierbaren Gasbestandteil enthält, ist dadurch gekennzeichnet, dass das Verfahren folgende Schritte umfasst:
- Erfassen des zeitlichen Verlaufs des Sensorsignals ,
- Erfassen des zeitlichen Verlaufs des Wärmeeintrags,
- Vergleichen des zeitlichen Verlaufs des Sensorsignals und des zeitlichen Verlaufs des Wärmeeintrags ,
- Erkennen des Auftretens eines Überschusses an oxidierbaren Gasbestandteilen daran, dass das Sensorsignal stark abfällt und gleichzeitig der Wärmeeintrag steigt.

Ein erfindungsgemäßes System zum Erkennen des Auftretens eines Überschusses an oxidierbaren Gasbestandteilen in einem Gasgemisch, welches Sauerstoff und wenigstens einen weiteren, oxidierbaren, Gasbestandteil enthält, kann vorteilhaft zur Überwachung des Innenraums sowie des Kathodenabgases einer Brennstoffzelle auf Wasserstoffaustritt eingesetzt werden. Hier kommt der Vorteil des erfindungsgemäßen Systems zu tragen, dass keine weitere Information über den Sauerstoffgehalt der Gasatmosphäre zur Verfügung steht.

Ein erfindungsgemäßes System zum Erkennen des Auftretens eines Überschusses an oxidierbaren Gasbestandteilen in einem Gasgemisch, welches Sauerstoff und wenigstens einen weiteren oxidierbaren Gasbestandteil enthält, kann weiter vorteilhaft zur Überwachung an Kesselwänden verwendet werden, indem das Auftreten eines CO-Überschusses bei gleichzeitigem O2 - Mangel in Kesselwandnähe erkannt wird. Das Auftreten häufiger CO-Überschüsse bei gleichzeitigem 02 - Mangel an der Kesselwand führt langfristig zu Korrosion und ist daher zu überwachen. Da beim Auftreten eines CO-Überschusses die Gasatmosphäre lokal im Luftmangel ist, und keine weitere Information über den lokalen Sauerstoffgehalt vorliegt, ist das erfindungsgemäße System hier sehr vorteilhaft anwendbar und kann insbesondere zwischen dem unkritischen Zustand mit viel CO bei viel 02 und dem überkritischen Zustand mit viel CO bei wenig oder keinem 02 zuverlässig unterscheiden.

Schließlich kann ein erfindungsgemäßes Systems zum Erkennen des Auftretens eines Überschusses an oxidierbaren Gasbestandteilen in einem Gasgemisch, welches Sauerstoff und wenigstens einen weiteren oxidierbaren Gasbestandteil enthält, auch vorteilhaft zur Überwachung und Regelung von Verbrennungsprozessen verwendet werden, indem das Einsetzen unvollständiger Verbrennung erkannt wird. Dabei hat das erfindungsgemäße System den Vorteil, dass keine weitere Information, die außerhalb des Sensorelementes liegt, verwendet werden muss, insbesondere nicht die Lüfterdrehzahl oder die Position eines Stellungsreglers der Verbrennungsluftzufuhr.

Weiterhin umfasst die vorliegende Erfindung ein Computerprogramm, also eine Software mit Programmcode zur Durchführung der Verfahrensschritte des erfindungsgemäßen Verfahrens zum Erkennen des Auftretens eines Überschusses an oxidierbaren Gasbestandteilen in einem Gasgemisch, welches Sauerstoff und wenigstens einen weiteren oxidierbaren Gasbestandteil enthält, wenn das Programm in einem Computer oder einer Elektronik zur Steuerung und Regelung ausgeführt wird.

Anhand der Zeichnungen, in denen ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Figur 1:: eine schematische Darstellung eines erfindungsgemäßen Systems zum Erkennen des Auftretens eines Überschusses an oxidierbaren Gasbestandteilen in einem Gasgemisch, welches Sauerstoff und wenigstens einen weiteren, oxidierbaren, Gasbestandteil enthält, sowie
- Figur 2:: einen beispielhaften Verlauf der Sensorspannung und der Sensorheizleistung beim Übergang vom Bereich des Luftüberschusses in den Luftmangel und wieder in den Luftüberschuss.

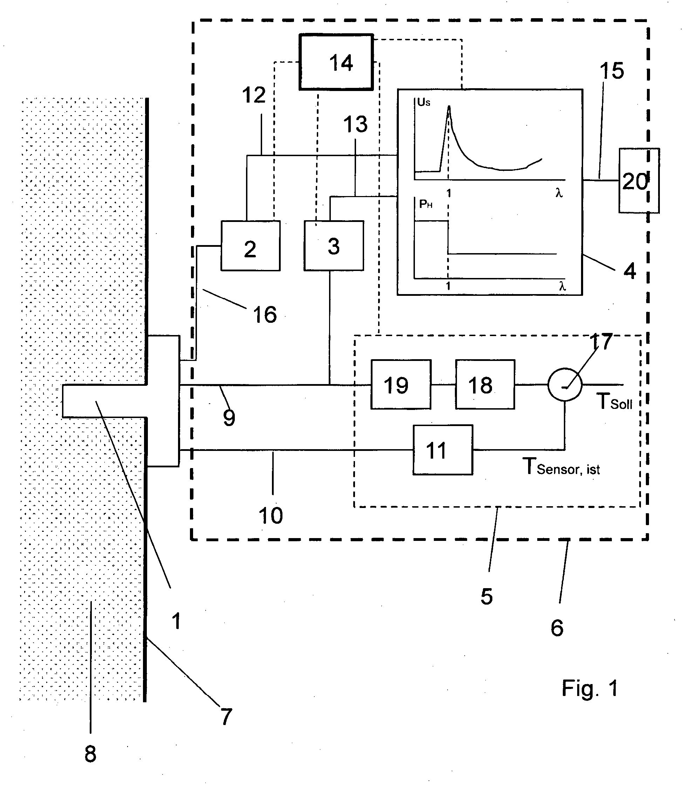

Es werde zunächst Figur 1 betrachtet. Figur 1 zeigt ein System zum Erkennen des Auftretens eines Überschusses an oxidierbaren Gasbestandteilen in einem Gasgemisch, welches Sauerstoff und wenigstens einen weiteren oxidierbaren Gasbestandteil enthält. Das System umfasst ein fremdbeheiztes, temperaturgeregeltes, potentiometrisches Sensorelement 1 mit wenigstens einer Sensorelektrode, an der im Bereich des Sauerstoffüberschusses eine exotherme, katalytische Reaktion zwischen dem wenigstens einen oxidierbaren Gasbestandteil und Sauerstoff stattfinden kann, wobei die katalytische Reaktion einen messbaren Beitrag zu einer an der Sensorelektrode messbaren Sensorspannung und einem messbaren Wärmeeintrag in das Sensorelement verursacht. Die Sensorelektrode ist mit einer Signalleitung 16 verbunden. Das Sensorelement 1 umfasst auch eine Widerstandsbahn, die als Temperatursensor und/oder zur Erzeugung der Temperatur selbst herangezogen werden kann, und die mit einer Temperatursignalleitung 10 verbunden ist.

Das Sensorelement 1 ist an der Wand 7 eines einer zu untersuchenden oder zu überwachenden Gasatmosphäre 8 begrenzenden Behältnisses angebracht, und es ragt wenigstens mit dem Teil, der die Sensorelektroden trägt, in die Gasatmosphäre 8. Das Sensorelement muss allerdings nicht in die Gasatmosphäre hineinragen. In einer weiteren Variante, hier nicht durch eine Figur dargestellt, befindet sich das Sensorelement in einem Sackloch, in dem für einen ausreichenden Gasaustausch mit der zu überwachenden Gasatmosphäre gesorgt ist. Es kann in einer weiteren Variante, hier ebenfalls nicht durch eine Figur dargestellt, eine Gasabsaugung mittels einer Absaugpumpe realisiert sein, und das Sensorelement ist dann in dem so realisierten Seitenstrom angebracht.

Das Sensorelement 1 kann ein solches sein, wie es in der DE 10 2006 054 505 A1 beschrieben ist. Das Sensorelement 1 kann auch vollständig in der Gasatmosphäre 8 eingetaucht sein. Bei dem Behältnis, in bzw. an dessen Wand das Sensorelement 1 angebracht ist, kann die das Abgas führende Rohrleitung eines Verbrennungssystems sein, oder die Kesselwand eines Feuerungskessels. Das Sensorelement 1 kann auch innerhalb eines Brennstoffzellenheizgerätes angebracht sein. Dann kann es dort zur Lecküberwachung auf Austritt von Wasserstoff verwendet werden.

Das System umfasst ein erstes, an sich bekanntes, Mittel 2 zum Erfassen der Sensorsignalspannung, wobei das erste Mittel 2 mit der Sensorsignalleitung 16 verbunden ist.

Die dem Sensorelement 1 zur Aufrechterhaltung einer vorgegebenen Arbeitstemperatur zuzuführende, geregelte Heizleistung wird dem Sensorelement 1 über eine elektrische Heizleitung 9 von einer an sich bekannten elektronischen Regelschaltung 5 her zugeführt. Die Regelschaltung 5 umfasst wenigstens eine mit der Temperatursignalleitung 10 verbundene Messwerterfassungseinrichtung 11, eine Vergleichsstelle 17, um die Ist-Temperatur des Sensors mit der Solltemperatur zu vergleichen, eine Regelreinheit 18 und ein Stellglied 19, welches die Heizleistung über die elektrische Leitung 9 nach außen abgibt.

Das System umfasst ein zweites, an sich ebenfalls bekanntes, Mittel 3 zum Erfassen der zur Fremdbeheizung dem Sensorelement zugeführten Heizleistung. Das Mittel 3 ist ein Beispiel für den allgemeineren Fall eines Mittels zur Erfassung der zur Fremdbeheizung des Sensorelementes dem Sensorelement zugeführten Wärmeeintrags. Es könnte auch ein Mittel zum Erfassen des Heizstromes in dem Heizerelement oder der Heizspannung aber auch zum Erfassen einer daraus abgeleiteten messbaren Größe, wie beispielsweise des Widerstands des Heizerelementes oder des Innenwiderstandes des Sensorelementes selbst, im Falle eines keramischen Sensorelementes des keramischen Innenwiderstandes oder einer ähnlichen im Prinzip bekannten Größe sein.

Weiter umfasst das System ein drittes Mittel 4 zum Erkennen eines Überschusses an oxidierbaren Gasbestandteilen. Das dritte Mittel ist ebenfalls eine elektronische Schaltung. Das dritte Mittel 4 ist mit dem ersten Mittel 2 und dem zweiten Mittel 3 über Signalleitungen zum Datenaustausch verbunden. Das erste Mittel 2, das zweite Mittel 3, die elektronische Regelschaltung 5 und das dritte Mittel 4 sind in der Sensorelektronik 6 zusammengefasst und dort als einzelne Funktionsblöcke realisiert.

Die Sensorelektronik 6 umfasst weiter noch einen Mikroprozessor 14, der unter anderem die zur Durchführung des erfindungsgemäßen Verfahrens erforderlichen Abläufe steuert und einen Daten- und einen Programmspeicher aufweist.

In dem Programmspeicher ist ein Computerprogramm, also eine Software mit Programmcode zur Durchführung der Verfahrensschritte des erfindungsgemäßen Verfahrens zum Erkennen des Auftretens eines Überschusses an oxidierbaren Gasbestandteilen in einem Gasgemisch, welches Gasgemisch Sauerstoff und wenigstens einen weiteren oxidierbaren Gasbestandteil enthält, gespeichert.

Das dritte Mittel 4 ist dazu eingerichtet, um aus der Relation zwischen dem zeitlichen Verlauf der Sensorsignalspannung und dem zeitlichen Verlauf der Heizleistung ein Meldesignal für das Auftreten eines Überschusses an oxidierbaren Gasbestandteilen zu erzeugen und dieses über eine Indikatorsignalleitung 15 nach außen zur Weiterverarbeitung zur Verfügung zu stellen und/oder um dieses einer Anzeigevorrichtung 20 zuzuleiten.

In dem dritten Mittel 4 werden der zeitliche Verlaufs der Sensorspannung und der zeitliche Verlauf der Heizleistung erfasst und verglichen. Das Auftretens eines Überschusses an oxidierbaren Gasbestandteilen wird daran erkannt, dass die Sensorspannung stark abfällt und gleichzeitig die Heizleistung steigt.

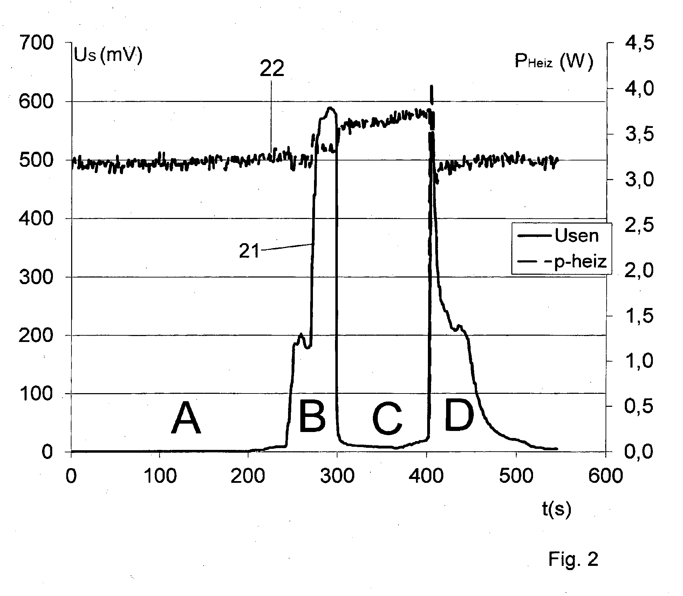

Dies ist in Figur 2 veranschaulicht.

Dort ist der zeitliche Verlauf der Sensorsignalspannung U_{S}, Bezugsziffer 21, und der zeitliche Verlauf der Heizleistung P_{Heiz}, Bezugsziffer 22, eines temperaturgeregelten Sensorelements 1 nebeneinander dargestellt. Das Sensorelement 1 ist dabei in den Abgaskanal einer Feuerungsanlage eingebaut. Während dem in dem Diagramm der Figur 2 dargestellten Zeitraum wird die Einstellung der Feuerungsanlage mehrfach geändert.

In einem ersten Zeitabschnitt A, von 0s bis etwa 240s, befindet sich die Feuerungsanlage im Bereich des hohen Luftüberschusses. Das Sensorsignal ist sehr gering, die Heizleistung ist auf etwa 3,2 W geregelt.

In einem zweiten Zeitabschnitt B, von etwa 240s bis etwa 300s, wird die Verbrennungsluftzufuhr langsam gedrosselt, bis bei 300s etwa eine Luftzahl λ von etwas mehr als 1 erreicht ist. Die Sensorsignalspannung steigt stark an.

In einem dritten Bereich C, ab etwa 300s, wird die Luftzufuhr weiter reduziert, die Feuerungsanlage kommt in den Bereich des Luftmangels. Es herrscht nun ein Überschuss an oxidierbaren Gasbestandteilen im Abgas, der noch verbliebene Restsauerstoffgehalt im Abgas genügt nicht mehr für eine vollständige Oxidation der oxidierbaren Gasbestandteile an der Sensorelektrode. Die Sensorspannung U_{S} bricht ein und geht wieder auf nahe Null zurück. Gleichzeitig steigt die Heizleistung an auf ungefähr 3,8 W. Dieser Effekt ist so zu deuten, dass im Bereich des Luftmangels eine exotherme Elektrodenreaktion an der Sensorelektrode nicht mehr stattfinden kann. Es entfällt der dadurch erzeugte zusätzliche Wärmeeintrag in das Sensorelement 1 weg, was durch eine Erhöhung der von der Sensorelektronik her in das Sensorelement eingetragenen Heizleistung kompensiert werden muss, soll die Sensortemperatur auf dem Sollwert gehalten werden.

Die Verbrennungsluftzufuhr wird dann wieder erhöht, bis in einem vierten Zeitabschnitt D, im Bereich ab etwa 400s, die Luftzahl λ wieder größer als 1 wird. Nun kann wieder eine Sensorsignalspannung gemessen werden. Auch findet an der Sensorelektrode wieder eine exotherme Oxidationsreaktion statt, welche zusätzlich Wärme erzeugt. Daher wird die von außen in den Sensor einzutragende Heizleistung wieder reduziert, die Heizleistung stellt sich wieder bei etwa 3,2 W ein.

Aus der Figur 2 wird deutlich, dass durch alleinige Betrachtung der Sensorsignalspannung U_{S} in den Bereichen A zwischen 0 und 240s und C zwischen 300s und 400s nicht festgestellt werden könnte, ob die Feuerungsanlage sich im Bereich des Luftüberschusses oder des Luftmangels befindet, denn in beiden Bereichen A und C ist die Sensorsignalspannung U_{S} bei nahe Null mV. Erst wenn der zeitliche Verlauf der Heizleistung P_{Heiz} dazu betrachtet wird, lässt sich dies feststellen. Ein Abfallen der Sensorspannung bei gleichzeitigem Anstieg der Heizleistung bedeutet, dass der Zustand des Luftmangels vorliegt.

Wenn die Luftzufuhr sehr schnell reduziert wird, tritt sofort bei Unterschreiten von λ = 1 ein signifikanter Sprung in der Heizleistung von 3,2 W auf ca. 3,8 W auf. Dieser Sprung kann dann ebenso groß und schnell sein, wie der Rücksprung beim erneuten Überschreiten der λ = 1 Schwelle in Richtung auf einen höheren Sauerstoffgehalt. Damit wird es möglich, mit dem erfindungsgemäßen System und Verfahren den λ = 1 Sprung zu identifizieren und zwar ohne dass eine zusätzliche Sauerstoff-Sprungsonde benötigt wird. Das erfindungsgemäße System und Verfahren eignet sich somit zur definierten Rückführung der Verbrennungsanlage vom λ = 1 Zustand in Richtung einer sauberen, vollständigen Verbrennung.

Besonders vorteilhaft lässt sich das beschriebene Verfahren in Verbindung mit miniaturisierten, planaren Sensorelementen ausführen, bei denen aufgrund der geringen Masse und damit geringen Wärmekapazität ein Entfallen des zusätzlichen Wärmeeintrags der exothermen Elektrodenreaktion eine schnelle und deutliche Temperaturänderung des Sensorelements bewirkt, wodurch sich auch die Heizleistung schnell und merklich ändern muss, um die Sensortemperatur auf dem gewünschten Sollwert zu halten.

### Bezugszeichenliste

- 1: Sensorelement
- 2: Erstes Mittel zum Erfassen der Sensorspannung
- 3: Zweites Mittel zum Erfassen der Heizleistung
- 4: Drittes Mittel
- 5: Regelschaltung
- 6: Sensorelektronik
- 7: Wand
- 8: Gasatmosphäre
- 9: Elektrische Leitung
- 10: Temperatursignalleitung
- 11: Messwerterfassungseinrichtung
- 12: Signalleitung
- 13: Signalleitung
- 14: Mikroprozessor
- 15: Indikatorsignalleitung
- 16: Sensorsignalleitung
- 17: Vergleichsstelle
- 18: Regeleinheit
- 19: Stellglied
- 20: Anzeigevorrichtung
- 21: Sensorsignalspannung
- 22: Heizleistung

## Patentansprüche

1. System zum Erkennen des Auftretens eines Überschusses an oxidierbaren Gasbestandteilen in einem Gasgemisch, wobei das Gasgemisch Sauerstoff und wenigstens einen weiteren oxidierbaren Gasbestandteil enthält, wobei das System umfasst
- ein fremdbeheiztes Sensorelement (1) mit wenigstens einer Sensorelektrode, an der im Bereich des Sauerstoffüberschusses eine exotherme, katalytische Reaktion zwischen dem wenigstens einen oxidierbaren Gasbestandteil und Sauerstoff stattfinden kann, wobei die katalytische Reaktion einen messbaren Beitrag zu einem an der Sensorelektrode abgreifbaren Sensorsignal und einen messbaren Wärmeeintrag in das Sensorelement verursacht,
- ein erstes Mittel (2) zum Erfassen des Sensorsignals,
- ein zweites Mittel (3) zum Erfassen eines zur Fremdbeheizung dem Sensorelement zugeführten messbaren Wärmeeintrags,
**dadurch gekennzeichnet, dass** das System ein drittes Mittel (4) zum Erkennen eines Überschusses an oxidierbaren Gasbestandteilen umfasst, wobei das dritte Mittel (4) mit dem ersten Mittel (2) und dem zweiten Mittel (3) signaltechnisch verbunden ist, und wobei das dritte Mittel (4) dazu eingerichtet ist, um aus dem Abfall des Sensorsignals und dem gleichzeitigen Anstieg des Wärmeeintrags ein Meldesignal für das Auftreten eines Überschusses an oxidierbaren Gasbestandteilen zu erzeugen.

2. System nach Anspruch 1, **dadurch gekennzeichnet, dass** das Sensorelement (1) ein potentiometrisches Sensorelement ist und dass das Sensorsignal eine zwischen zwei Sensorelektroden messbare Sensorspannung ist.

3. System nach Anspruch 2, **dadurch gekennzeichnet, dass** das Sensorelement (1) einen sauerstoffionenleitenden Festkörperelektrolyten mit daran angebrachten wenigstens zwei Elektroden umfasst, wobei eine erste Elektrode katalytisch aktiv und eine zweite Elektrode katalytisch weniger aktiv ist, wobei im Bereich des Sauerstoffüberschusses die katalytische Reaktion zwischen wenigstens einem oxidierbaren Gasbestandteil und Sauerstoff eine messbare Erhöhung der zwischen den beiden Sensorelektroden messbaren Sensorspannung und einen zusätzlichen Wärmeeintrag in das Sensorelement verursacht und wobei im Bereich des Überschusses an oxidierbaren Gasbestandteilen die messbare Erhöhung der zwischen den beiden Sensorelektroden abgreifbaren Sensorsignalspannung und der zusätzliche Wärmeeintrag in das Sensorelement nicht auftreten.

4. System nach Anspruch 3, **dadurch gekennzeichnet, dass** das Sensorelement einen planaren keramischen Träger mit einer darauf aufgebrachten Schicht aus einem sauerstoffionenleitenden Festelektrolyten umfasst, wobei auf einer ersten Breitseite der Festelektrolyt-Schicht und die beiden Elektroden aufgebracht sind.

5. System nach Anspruch 3, **dadurch gekennzeichnet, dass** das dritte Mittel dazu eingerichtet ist, um bei einem Abfall der Sensorspannung und einem gleichzeitigen Anstieg der Heizleistung ein Indikatorsignal für das Auftreten eines Überschusses an oxidierbaren Gasbestandteilen zu erzeugen.

6. Verfahren zum Erkennen des Auftretens eines Überschusses an oxidierbaren Gasbestandteilen in einem Gasgemisch, welches Sauerstoff und wenigstens einen weiteren oxidierbaren Gasbestandteil enthält, wobei das Verfahren arbeitet
- mit einem fremdbeheizten, temperaturgeregelten Sensorelement (1) mit wenigstens einer Sensorelektrode, an der im Bereich des Sauerstoffüberschusses eine exotherme, katalytische Reaktion zwischen dem wenigstens einen oxidierbaren Gasbestandteil und Sauerstoff stattfinden kann, wobei die katalytische Reaktion einen messbaren Beitrag zu einem Sensorsignal und einen messbaren Wärmeeintrag in das Sensorelement verursacht,
- mit einem ersten Mittel (2) zum Erfassen des Sensorsignals,
- mit einem zweiten Mittel (3) zum Erfassen des zur Fremdbeheizung dem Sensorelement zugeführten Wärmeeintrags,
**dadurch gekennzeichnet, dass** das Verfahren folgende Schritte umfasst:
- Erfassen des zeitlichen Verlaufs des Sensorsignals,
- Erfassen des zeitlichen Verlaufs des Wärmeeintrags,
- Vergleichen des zeitlichen Verlaufs des Sensorsignals und des zeitlichen Verlaufs des Wärmeeintrags ,
- Erkennen des Auftretens eines Überschusses an oxidierbaren Gasbestandteilen daran, dass das Sensorsignal stark abfällt und gleichzeitig der Wärmeeintrag steigt.

7. Verfahren nach Anspruch 6, **dadurch gekennzeichnet, dass** das Sensorelement (1) ein potentiometrisches Sensorelement ist und dass das Sensorsignal eine zwischen zwei Sensorelektroden messbare Sensorspannung ist.

8. Verwendung des Verfahrens nach Anspruch 6 oder 7 zur Überwachung an Kesselwänden, indem das Auftreten eines CO-Überschusses bei gleichzeitigem O2 - Mangel in Kesselwandnähe erkannt wird.

9. Verwendung des Verfahrens nach Anspruch 6 oder 7 zur Überwachung des Innenraumes sowie des Kathodenabgases einer Brennstoffzelle auf Wasserstoffaustritt.

10. Verwendung des Verfahrens nach Anspruch 6 oder 7 zur Überwachung und Regelung von Verbrennungsprozessen, indem das Einsetzen unvollständiger Verbrennung erkannt wird, insbesondere der Punkt λ = 1.

11. Computerprogramm mit Programmcode zur Durchführung der Verfahrensschritte des Verfahrens nach Anspruch 6, wenn das Programm in einem Computer oder einer Elektronik zur Steuerung und Regelung ausgeführt wird.

## Claims

1. System for detecting the occurrence of an excess of oxidizable gas constituents in a gas mixture, wherein the gas mixture comprises oxygen and at least one further oxidizable gas constituent, wherein the system comprises
- an externally heated sensor element (1) with at least one sensor electrode on which, in the presence of an excess of oxygen, an exothermic, catalytic reaction can take place between the at least one oxidizable gas constituent and oxygen, wherein the catalytic reaction results in a measurable contribution to a sensor signal that can be picked off from the sensor electrode and a measurable introduction of heat into the sensor element,
- a first means (2) for detecting the sensor signal,
- a second means (3) for detecting a measurable introduction of heat supplied to the sensor element for external heating purposes, **characterized in that** the system comprises a third means (4) for detecting an excess of oxidizable gas constituents, wherein the third means (4) is connected in signal-transmitting fashion to the first means (2) and to the second means (3), and wherein the third means (4) is designed to generate, from the fall in the sensor signal and the simultaneous rise in the introduction of heat, a report signal indicating the occurrence of an excess of oxidizable gas constituents.

2. System according to Claim 1, **characterized in that** the sensor element (1) is a potentiometric sensor element and **in that** the sensor signal is a sensor voltage that can be measured between two sensor electrodes.

3. System according to Claim 2, **characterized in that** the sensor element (1) comprises an oxygen-ion-conducting solid electrolyte with at least two electrodes attached thereto, wherein a first electrode is catalytically active and a second electrode is less catalytically active, wherein, in the presence of an excess of oxygen, the catalytic reaction between at least one oxidizable gas constituent and oxygen results in a measurable increase in the sensor voltage that can be measured between the two sensor electrodes and an additional introduction of heat into the sensor element, and wherein, in the presence of an excess of oxidizable gas constituents, the measurable increase in the sensor signal voltage that can be picked off between the two sensor electrodes and the additional introduction of heat into the sensor element do not occur.

4. System according to Claim 3, **characterized in that** the sensor element comprises a planar ceramic substrate with a layer of an oxygen-ion-conducting solid electrolyte applied thereto, wherein the two electrodes are applied to a first broad side of the solid electrolyte layer.

5. System according to Claim 3, **characterized in that** the third means are designed to generate, in the event of a fall in the sensor voltage and a simultaneous rise in the heating power, an indicator signal indicating the occurrence of an excess of oxidizable gas constituents.

6. Method for detecting the occurrence of an excess of oxidizable gas constituents in a gas mixture which comprises oxygen and at least one further oxidizable gas constituent, wherein the method operates
- with an externally heated, temperature-regulated sensor element (1) with at least one sensor electrode on which, in the presence of an excess of oxygen, an exothermic, catalytic reaction can take place between the at least one oxidizable gas constituent and oxygen, wherein the catalytic reaction results in a measurable contribution to a sensor signal and a measurable introduction of heat into the sensor element,
- with a first means (2) for detecting the sensor signal,
- with a second means (3) for detecting the introduction of heat supplied to the sensor element for external heating purposes, **characterized in that** the method comprises the following steps:
- detecting the profile with respect to time of the sensor signal,
- detecting the profile with respect to time of the introduction of heat,
- comparing the profile with respect to time of the sensor signal and the profile with respect to time of the introduction of heat,
- detecting the occurrence of an excess of oxidizable gas constituents from a significant fall in the sensor signal and simultaneous rise in the introduction of heat.

7. Method according to Claim 6, **characterized in that** the sensor element (1) is a potentiometric sensor element and **in that** the sensor signal is a sensor voltage that can be measured between two sensor electrodes.

8. Use of the method according to Claim 6 or 7 for monitoring on boiler walls, by virtue of the occurrence of an excess of CO with a simultaneous deficiency of 02 in the vicinity of the boiler wall being detected.

9. Use of the method according to Claim 6 or 7 for monitoring the interior and the cathode offgas of a fuel cell with regard to the escape of hydrogen.

10. Use of the method according to Claim 6 or 7 for monitoring and regulating combustion processes by virtue of the onset of incomplete combustion, in particular the point A = 1, being detected.

11. Computer program with program code for carrying out the method steps of the method according to Claim 6 when the program is executed in a computer or in electronics for control and regulation.

## Revendications

1. Système de détection de l'apparition d'un excès de composants gazeux oxydables dans un mélange de gaz, le mélange de gaz contenant de l'oxygène et au moins un autre composant gazeux oxydable, le système comprenant
un élément de capteur (1) chauffé de l'extérieur et présentant au moins une électrode de capteur sur laquelle une réaction catalytique exothermique peut avoir lieu entre le ou les composants gazeux oxydables et l'oxygène dans la zone de l'excès d'oxygène, la réaction catalytique provoquant une contribution mesurable à un signal de capteur qui peut être saisi sur l'électrode de capteur et un apport mesurable de chaleur dans l'élément de capteur,
un premier moyen (2) de saisie du signal de capteur,
un deuxième moyen (3) de saisie d'un apport de chaleur mesurable apporté à l'élément de capteur pour le chauffer de l'extérieur,
**caractérisé en ce que** le système comporte un troisième moyen (4) de détection d'un excès de composants gazeux oxydables, le troisième moyen (4) étant raccordé au premier moyen (2) et au deuxième moyen (3) en vue d'un échange de signaux et le troisième moyen (4) étant conçu pour former à partir de la chute du signal de capteur et de l'augmentation simultanée de l'apport de chaleur un signal d'avertissement qui indique l'apparition d'un excès de composants gazeux oxydables.

2. Système selon la revendication 1, **caractérisé en ce que** l'élément de capteur (1) est un élément de capteur potentiométrique et **en ce que** le signal de capteur est une tension de capteur mesurable entre deux électrodes de capteur.

3. Système selon la revendication 2, **caractérisé en ce que** l'élément de capteur (1) comporte un électrolyte en corps solide conduisant des ions d'oxygène et sur lequel sont placées au moins deux électrodes, une première électrode étant catalytiquement active et une deuxième électrode catalytiquement moins active, et la réaction catalytique entre au moins un composant gazeux oxydable et l'oxygène provoquant dans la zone de l'excès d'oxygène une augmentation mesurable de la tension de capteur mesurable entre les deux électrodes de capteur et un apport supplémentaire de chaleur dans l'élément de capteur, l'augmentation mesurable de la tension du signal de capteur qui peut être saisie entre les deux électrodes du capteur et l'apport supplémentaire de chaleur ne survenant pas dans l'élément de capteur dans la zone de l'excès de composants gazeux oxydables.

4. Système selon la revendication 3, **caractérisé en ce que** l'élément de capteur comporte un support céramique plan sur lequel est appliquée une couche d'électrolyte solide conduisant les ions d'oxygène, les deux électrodes étant appliquées sur un premier côté large de la couche d'électrolyte solide.

5. Système selon la revendication 3, **caractérisé en ce que** le troisième moyen est conçu pour former un signal d'indication de l'apparition d'un excès de composants gazeux oxydables en cas de chute de la tension de capteur et d'augmentation simultanée de la puissance de chauffage.

6. Procédé de détection de l'apparition d'un excès de composants gazeux oxydables dans un mélange de gaz qui contient de l'oxygène et au moins un autre composant gazeux oxydable, le procédé travaillant avec
un élément de capteur (1) chauffé de l'extérieur, à température régulée et présentant au moins une électrode de capteur sur laquelle une réaction catalytique exothermique peut avoir lieu entre le ou les composants gazeux oxydables et l'oxygène dans la zone de l'excès d'oxygène, la réaction catalytique provoquant une contribution mesurable à un signal de capteur et un apport mesurable de chaleur dans l'élément de capteur,
un premier moyen (2) de saisie du signal de capteur,
un deuxième moyen (3) de saisie de l'apport de chaleur apporté à l'élément de capteur pour son chauffage depuis l'extérieur,
**caractérisé en ce que** le procédé comporte les étapes suivantes :
saisie de l'évolution temporelle du signal de capteur,
saisie de l'évolution temporelle de l'apport de chaleur,
comparaison de l'évolution temporelle du signal de capteur et de l'évolution temporelle de l'apport de chaleur,
détection de l'apparition d'un excès de composants gazeux oxydables lorsque le signal de capteur chute fortement et qu'en même temps l'apport de chaleur augmente.

7. Procédé selon la revendication 6, **caractérisé en ce que** l'élément de capteur (1) est un élément de capteur potentiométrique et **en ce que** le signal de capteur est une tension de capteur mesurable entre deux électrodes de capteur.

8. Utilisation du procédé selon les revendications 6 ou 7 pour la surveillance de parois de chaudière par détection de l'apparition d'un excès de CO simultané à un manque d'O₂ à proximité de la paroi de la chaudière.

9. Utilisation du procédé selon les revendications 6 ou 7 pour la surveillance de l'espace intérieur ainsi que des gaz d'échappement de cathode d'une cellule à combustible en termes de sortie d'hydrogène.

10. Utilisation du procédé selon les revendications 6 ou 7 pour la surveillance et la régulation de processus de combustion par détection de l'établissement d'une combustion incomplète et en particulier du point λ = 1.

11. Programme informatique doté d'un code de programme permettant la mise en oeuvre des étapes du procédé selon la revendication 6 lorsque le programme est exécuté sur un ordinateur ou une électronique de commande et de régulation.
